# EUROPEAN PATENT APPLICATION

(11) **EP 2 071 459 A1**
(43) Date of publication of application: **17.06.2009**
(21) Application number: 08170547.7
(22) Date of filing: 03.12.2008
(51) Int. Cl.: G06F 9/50, G06F 3/12, H04N 1/32

(54) **Information processing apparatus, information processing method, and storage medium**

(30) Priority: 13.12.2007 JP 2007321637
(71) Applicant: Ricoh Company, Ltd., Tokyo 143-8555 (JP)
(72) Inventor: Omori, Tetsuhiko, Kanagawa (JP)
(74) Representative: Schwabe - Sandmair - Marx

(57) **Abstract**

A disclosed information processing apparatus includes data processing components configured to process data; a workflow execution unit configured to request the data processing components to process the data according to a workflow defining processes to be executed to process the data and the order of the processes; and a processing component selection unit. The processing component selection unit is configured to receive a request to execute an undefined process not defined in the workflow from the workflow execution unit, the request including identification information for identifying the undefined process; to search a list for the identification information, the list associating the identification information with one of the data processing components for executing the undefined process; and if the identification information is found in the list, to request the workflow execution unit to request the one of the data processing components associated with the identification information to process the data.

## Description

### BACKGROUND OF THE INVENTION

### 1. Field of the Invention

The present invention generally relates to an information processing apparatus, an information processing method, and a storage medium storing program code for causing the information processing apparatus to perform the information processing method.

### 2. Description of the Related Art

A known multifunction device (MFD) includes functions of a copier, a facsimile machine, a scanner, a printer, and so on and is able to process, for example, scanned data according to a predefined workflow. A workflow defines a series of processes to be executed to process input data. For example, a workflow defines processes of converting input data into a PDF file and transmitting the PDF file as an email message. As another example, a workflow defines processes of converting input data into a PDF file, converting the PDF file into a JPEG file, and transmitting the JPEG file as an email message.

A user using such a multifunction device can select a desired workflow from multiple workflows provided in advance in the multifunction device. Meanwhile, the user cannot execute a process not defined in the provided workflows. Thus, such a multifunction device lacks flexibility to allow a user to execute a process not defined in workflows.

Patent document 1 discloses a computer and a method for allowing a user to execute a process not defined in a selected workflow by calling another workflow.

In the disclosed computer or the method, during the execution of a first workflow, a second workflow is executed to include a certain process, and after the execution of the second workflow is completed, the execution of the first workflow is resumed. The disclosed technology makes it possible to reduce the communications between computers even when conditions and attribute values of a workflow are changed.

[Patent document 1] Japanese Patent Application Publication No. 2003-006394

However, although the disclosed technology makes it possible to execute a process not directly defined in a first workflow by executing a second workflow, it is necessary to define the second workflow in advance. In other words, with the disclosed technology, it is not possible to dynamically and flexibly change a part of a predefined workflow.

### SUMMARY OF THE INVENTION

Aspects of the present invention provide an information processing apparatus, an information processing method, and a storage medium storing program code for causing the information processing apparatus to perform the information processing method that solve or reduce one or more problems caused by the limitations and disadvantages of the related art.

According to an aspect of the present invention, an information processing apparatus includes data processing components configured to process data; a workflow execution unit configured to request the data processing components to process the data according to a workflow defining processes to be executed to process the data and the order of the processes; and a processing component selection unit. The processing component selection unit is configured to receive a request to execute an undefined process not defined in the workflow from the workflow execution unit, the request including identification information for identifying the undefined process; to search a list for the identification information, the list associating the identification information with one of the data processing components for executing the undefined process; and if the identification information is found in the list, to request the workflow execution unit to request the one of the data processing components associated with the identification information to process the data.

Another aspect of the present invention provides an information processing method performed by an information processing apparatus including data processing components for processing data, a workflow execution unit for requesting the data processing components to process the data according to a workflow defining processes to be executed to process the data and the order of the processes, and a processing component selection unit. The information processing method includes a reception step, performed by the workflow execution unit, of receiving the data, a workflow identifier indicating the workflow, and identification information for identifying an undefined process not defined in the workflow; and a request step, performed by the processing component selection unit. The request step includes the steps of receiving a request to execute the undefined process from the workflow execution unit, the request including the identification information for identifying the undefined process, searching a list for the identification information, the list associating the identification information with one of the data processing components for executing the undefined process, and if the identification information is found in the list, requesting the workflow execution unit to request the one of the data processing components associated with the identification information to process the data.

### BRIEF DESCRIPTION OF THE DRAWINGS

FIG. 1 is a block diagram illustrating a system according to an embodiment of the present invention where an XG server is connected to an MFD, an SMTP server, an EDMS, and a file server;
FIG. 2 is a block diagram illustrating a system according to another embodiment of the present invention where an MFD is connected to an SMTP server, an EDMS, and a file server;
FIG. 3 is a block diagram illustrating a first exemplary configuration of an information processing apparatus;
FIGs. 4A through 4D are drawings illustrating exemplary workflows;
FIG. 5 is a table showing an exemplary processing component list;
FIG. 6 is a table showing exemplary setting information;
FIG. 7 is a drawing illustrating a common setting screen;
FIG. 8 is a flowchart showing an exemplary process performed by an information processing apparatus;
FIG. 9 is a drawing illustrating an exemplary architecture of an information processing apparatus;
FIG. 10 is a block diagram illustrating a second exemplary configuration of an information processing apparatus;
FIG. 11 is a block diagram illustrating a third exemplary configuration of an information processing apparatus;
FIG. 12 is a block diagram illustrating a fourth exemplary configuration of an information processing apparatus;
FIG. 13 is a drawing illustrating an exemplary selection screen for selecting "Image format specified in common setting" or "Convert data into BMP file";
FIG. 14A is a table showing setting information to be generated when a data processing component is selected;
FIG. 14B is a table showing setting information to be generated when a processing component selection unit is selected; and
FIG. 15 is a drawing illustrating another exemplary selection screen for selecting "Image format specified in common setting or "BMP".

### DESCRIPTION OF THE PREFERRED EMBODIMENTS

Preferred embodiments of the present invention are described below with reference to the accompanying drawings.

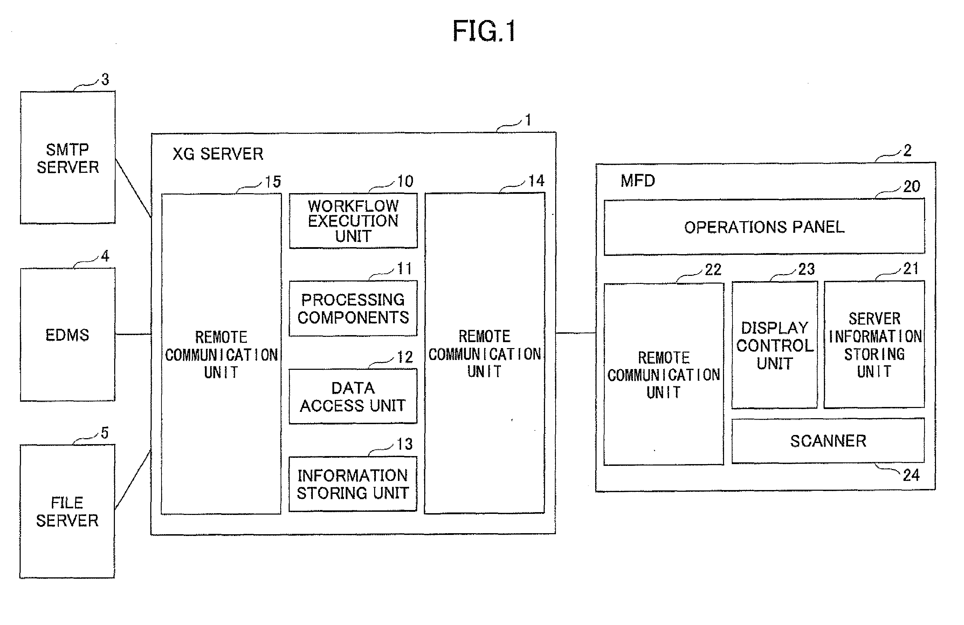

FIG. 1 is a block diagram illustrating a system according to an embodiment of the present invention where an XG server 1 is connected to a multifunction device (MFD) 2, a simple mail transfer protocol (SMTP) server 3, an electronic document management system (EDMS) 4, and a file server 5. In FIG. 1, the XG server 1 is connected directly to the MFD 2, the SMTP server 3, the EDMS 4, and the file server 5 via, for example, connection cables. Alternatively, the XG server 1 may be connected to the MFD 2, the SMTP server 3, the EDMS 4, and the file server 5 via a network such as a LAN, a WAN, or the Internet.

The XG server 1 includes a workflow execution unit 10; processing components 11; a data access unit 12 for accessing data stored, for example, in the EDMS 4 and the file server 5; an information storing unit 13 for storing predefined workflows, details of the workflows, logs of the workflows, and so on; a remote communication unit 14 for communicating with the MFD 2; and a remote communication unit 15 for communicating with the SMTP server 3, the EDMS 4, and the file server 5.

The MFD 2 includes an operations panel 20 for displaying information and receiving user inputs; a server information storing unit 21 for storing information on the XG server 1; a remote communication unit 22 for communicating with the XG server 1; a display control unit 23 that retrieves the address of the XG server 1 from the server information storing unit 21, connects the MFD 2 to the XG server 1, obtains information from the XG server 1, and transmits data and setting information input by the user on the operations panel 20 to the XG server 1 via the remote communication unit 22; and a scanner 24 for scanning, for example, a document to generate an image (data).

The above components of the XG server 1 and the components other than the operations panel 20 and the scanner 24 of the MFD 2 may be implemented by software modules stored in memories (not shown) and executed by CPUs (not shown) of the XG server 1 and the MFD 2. Although not shown, the XG server 1 may include, in addition to the CPU and the memory, a hard disk drive (HDD) for storing data and a communication device for communicating with other apparatuses such as the MFD 2. The MFD 2 may include, in addition to the CPU and the memory, an engine, a communication device, and an ASIC for implementing the functions of a copier, a facsimile machine, and so on.

The SMTP server 3 is a mail delivery server supporting the simple mail transfer protocol. The EDMS 4 is a document management system. The file server 5 enables file sharing on a network such as a LAN or a WAN. Each of the SMTP server 3, the EDMS 4, and the file server 5 may include a CPU, a memory, a communication interface, and an HDD to implement its function.

An exemplary process in the system shown in FIG. 1 is described below. When a user activates the scanner 24 of the MFD 2, the display control unit 23 retrieves connection information including the address of the XG server 1 from the server information storing unit 21 and connects the MFD 2 via the remote communication unit 22 to the XG server 1. When there are multiple XG servers in the system, the server information storing unit 21 contains information on the multiple XG servers and the display control unit 23 connects the MFD 2 to an appropriate XG server. Here, an "appropriate" XG server indicates an XG server storing a desired workflow to be executed.

The display control unit 23 obtains a workflow list from the information storing unit 13 of the XG server 1 and displays a selection screen on the operations panel 20 to allow the user to select a workflow from workflows in the workflow list. When the user selects one of the workflows, the display control unit 23 obtains an input form for entering the details, e.g., setting information of the selected workflow from the information storing unit 13 of the XG server 1, and displays the obtained input form on the operations panel 20.

After entering the setting information in the input form, the user starts scanning a document. Then, the scanner 24 scans the document and generates image data. The display control unit 23 sends the image data and the setting information input by the user to the XG server 1 via the remote communication unit 22. Details of the setting information are described later.

In the XG server 1, the workflow execution unit 10 merges the selected workflow with the setting information input by the user and requests (calls) the corresponding processing components 11 to process the image data according to the workflow. Then, the XG server 1 sends the processed image data via the remote communication unit 15 to the SMTP server 3, the EDMS 4, or the file server 5.

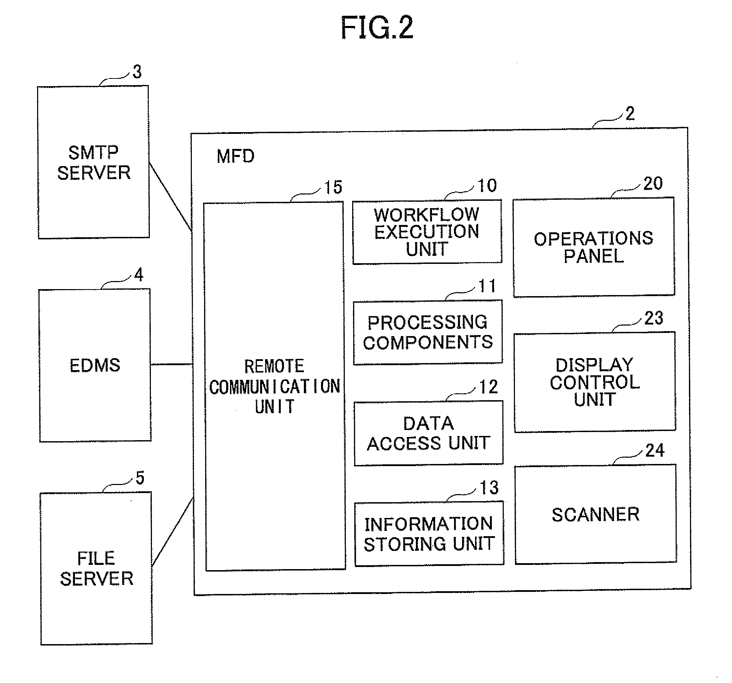

In the example shown in FIG. 1, the XG server 1 is configured as an information processing apparatus according to an embodiment of the present invention. Alternatively, as shown in FIG. 2, the MFD 2 may be configured as an information processing apparatus including the workflow execution unit 10, the processing components 11, the data access unit 12, the information storing unit 13, and the remote communication unit 15.

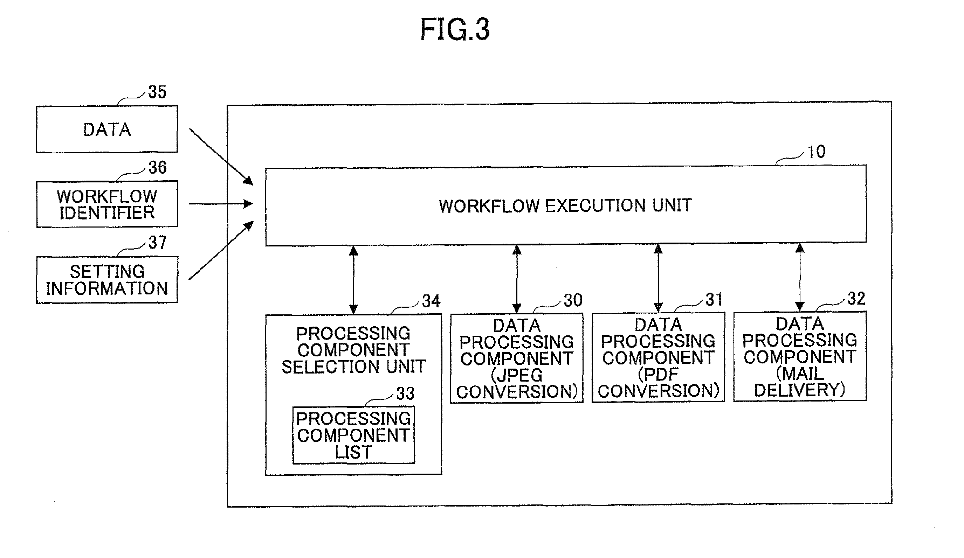

FIG. 3 is a partial block diagram of an information processing apparatus according to a first embodiment of the present invention. The information processing apparatus of the first embodiment includes the workflow execution unit 10, data processing components 30 through 32 used as the processing components 11, and a processing component selection unit 34 including a processing component list 33. Although the information processing apparatus of FIG. 3 includes three data processing components, the information processing apparatus may include any number of processing components.

Also, the information processing apparatus of the first embodiment may include a list generating unit that receives a workflow, determines processes (undefined processes) not defined in the workflow, and generates the processing component list 33 including information on the data processing components corresponding to the determined processes. The list generating unit makes it possible to automatically and dynamically generate the processing component list 33.

The following data and information are input to the workflow execution unit 10 as shown in FIG. 3: data 35 such as image data or document data to be processed; a workflow identifier 36 indicating a workflow defining processes to be executed to process the data 35 and the order of the processes; and setting information 37 including parameters necessary to execute the workflow. When the information processing apparatus is the XG server 1 of FIG. 1, the data and information are input from the MFD 2; and when the information processing apparatus is the MFD 2 of FIG. 2, the data and information are input from the display control unit 23. The workflow identifier 36 represents a workflow selected by the user from multiple workflows. The setting information 37 includes identification information such as parameters used to identify processes to be executed in the selected workflow.

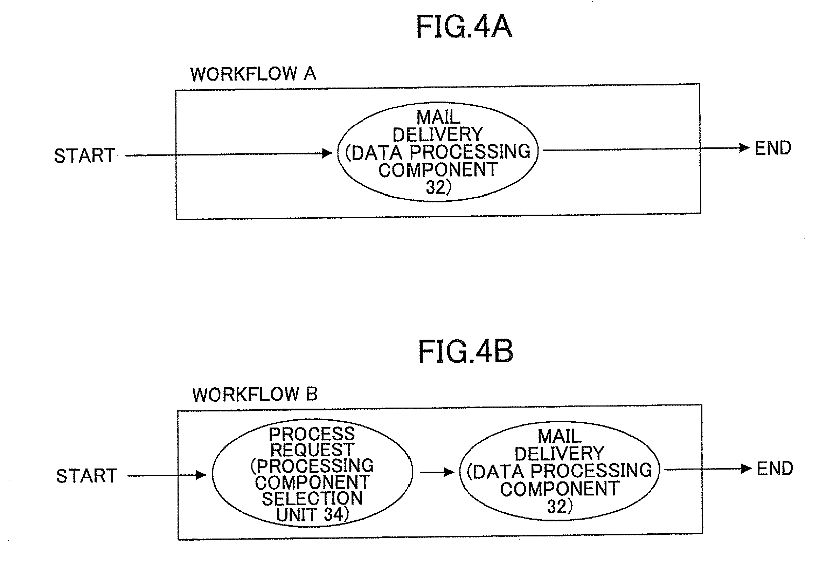

Details of workflows are described below. Workflows define processes to be executed to process input data and are stored as workflow data in the information storing unit 13 shown in FIG. 1. FIGs. 4A through 4D are drawings illustrating exemplary workflows. In a workflow A of FIG. 4A, after the process is started, the data processing component 32 sends data as an email message, and then the process is terminated.

In a workflow B of FIG. 4B, after the process is started, the processing component selection unit 34 selects a data processing component for processing data, the selected data processing component processes the data, the data processing component 32 sends the processed data as an email message, and then the process is terminated.

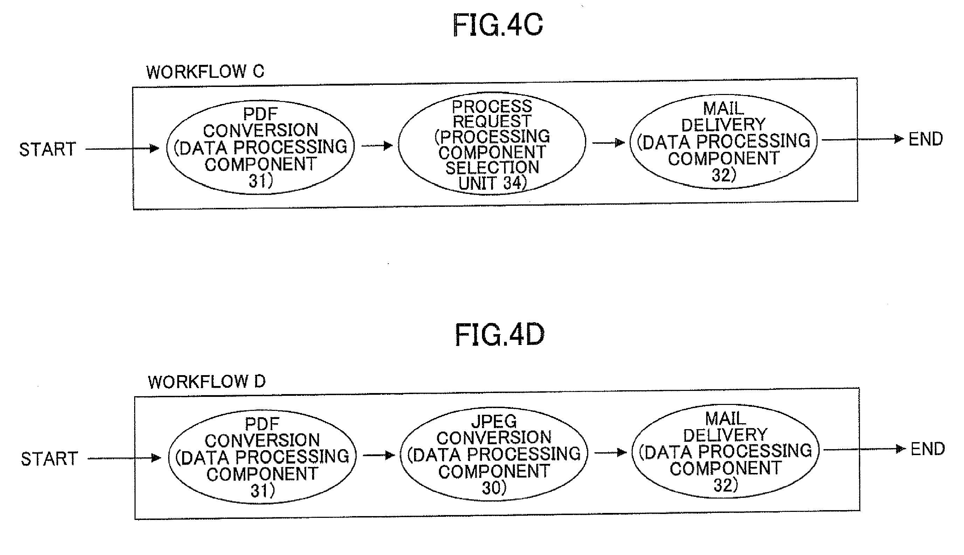

In a workflow C of FIG. 4C, after the process is started, the data processing component 31 converts data into a PDF file, the processing component selection unit 34 selects a data processing component for processing the PDF file, the selected data processing component processes the PDF file, the data processing component 32 sends the processed PDF file as an email message, and then the process is terminated.

In a workflow D of FIG. 4D, after the process is started, the data processing component 31 converts data into a PDF file, the data processing component 30 converts the PDF file into a JPEG file, the data processing component 32 sends the JPEG file as an email message, and then the process is terminated.

Referring back to FIG. 3, the workflow execution unit 10 requests one or more of the data processing components 30 through 32 to execute the corresponding processes according to a workflow specified by the input workflow identifier 36. For example, if the workflow is defined to process the data 35 by the data processing component 30 and then by the data processing component 31, the workflow execution unit 10 first sends the data 35 to the data processing component 30 and requests the data processing component 30 to process the data 35. When receiving the request, the data processing component 30 converts the data 35 into a JPEG file and returns the JPEG file to the workflow execution unit 10. Next, the workflow execution unit 10 sends the JPEG file to the data processing component 31 defined in the next step of the workflow and requests the data processing component 31 to process the JPEG file. When receiving the request, the data processing component 31 converts the JPEG file into a PDF file and returns the PDF file to the workflow execution unit 10. Then, the workflow is terminated.

Meanwhile, the workflow execution unit 10 receives the setting information 37 together with the data 35 and the workflow identifier 36. The workflow execution unit 10 extracts parameters for the data processing components 30, 31, and/or 32 from the setting information 37 and sends the parameters together with the data 35 to the corresponding data processing components.

The workflow execution unit 10 also extracts a parameter (identification information) for identifying a process not defined in the workflow specified by the workflow identifier 36 from the setting information 37 and sends the parameter to the processing component selection unit 34 to request to execute the process. The processing component selection unit 34 selects one of the data processing components 30, 31, and 32 based on the parameter in a request received from the workflow execution unit 10 by referring to the processing component list 33, and requests the workflow execution unit 10 to request the selected data processing component to process data.

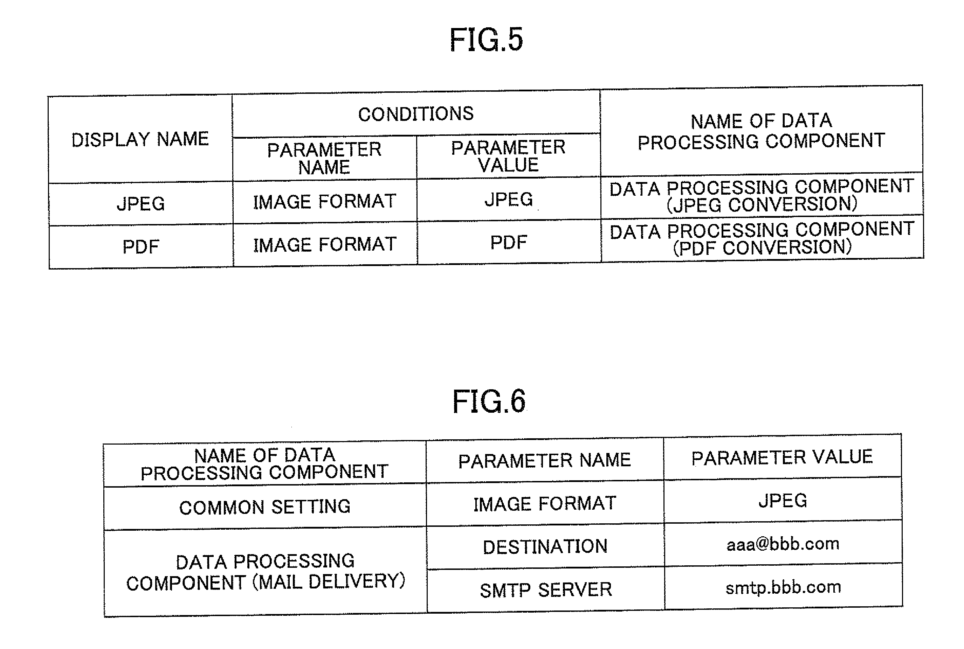

As exemplified by FIG. 5, the processing component list 33 may be implemented as a table including display names, conditions, and names of data processing components. The conditions include parameter names and parameter values. The parameter names include "image format", "destination", "SMTP server", and "process". The parameter values include JPEG, PDF, and a destination address. The parameter names and the parameter values are used to identify processes to be executed. The processing component selection unit 34 searches the processing component list 33 for a parameter name and a parameter value corresponding to those in the setting information 37. If the corresponding parameter name and parameter value are found in the processing component list 33, the processing component selection unit 34 selects a data processing component associated with the found parameter name and parameter value and requests the workflow execution unit 10 to request the selected data processing component to process data.

Thus, the processing component selection unit 34 makes it possible to execute a process (undefined process) not defined in a workflow based on setting information input by the user to execute the workflow. In other words, the above embodiment makes it possible to flexibly execute a process not defined in a workflow without changing the definition of the workflow and without preparing another workflow to be called from the original workflow.

In the processing component list 33 of FIG. 5, "image format" is specified as parameter names and JPEG and PDF are specified as parameter values, and the data processing components 30 and 31 are associated with the corresponding parameter names and parameter values.

As exemplified by FIG. 6, the setting information 37 may be implemented as a table including names of data processing components, parameter names, and parameter values. The names of data processing components include "common setting" in addition to the names of the data processing components 30 through 32. In FIG. 6, "image format" and "JPEG," are specified as the parameter name and the parameter value for the common setting; and "destination" and "SMTP server" are specified as the parameter names, and a destination address and an address of an SMTP server are specified as the parameter values for the data processing component 32.

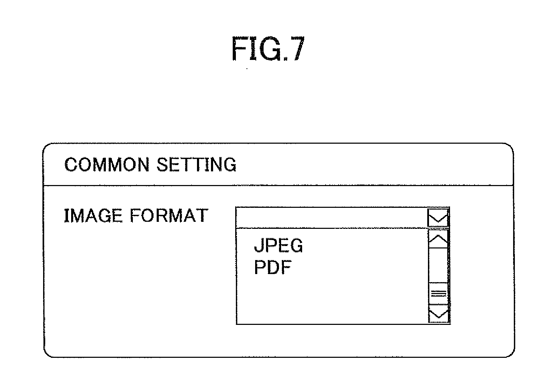

The common setting is used to select a set of a parameter name and a parameter value from parameter names and parameter values included in the processing component list 33. For example, the common setting is specified on a screen as shown in FIG. 7. The screen shown in FIG. 7 includes a combo box listing image formats. The user can select either JPEG or PDF using an input device such as a mouse. The list of image formats is obtained from the processing component list 33. In this example, display names JPEG and PDF of the image formats in the processing component list 33 of FIG. 5 are displayed in the combo box of the screen shown in FIG. 7.

In the example shown in FIG. 6, one set of a parameter name and a parameter value selected from the processing component list 33 is specified as the common setting. Alternatively, two or more sets of parameter names and parameter values may be specified as common settings in the order of process sequence to execute two or more processes not defined in a workflow.

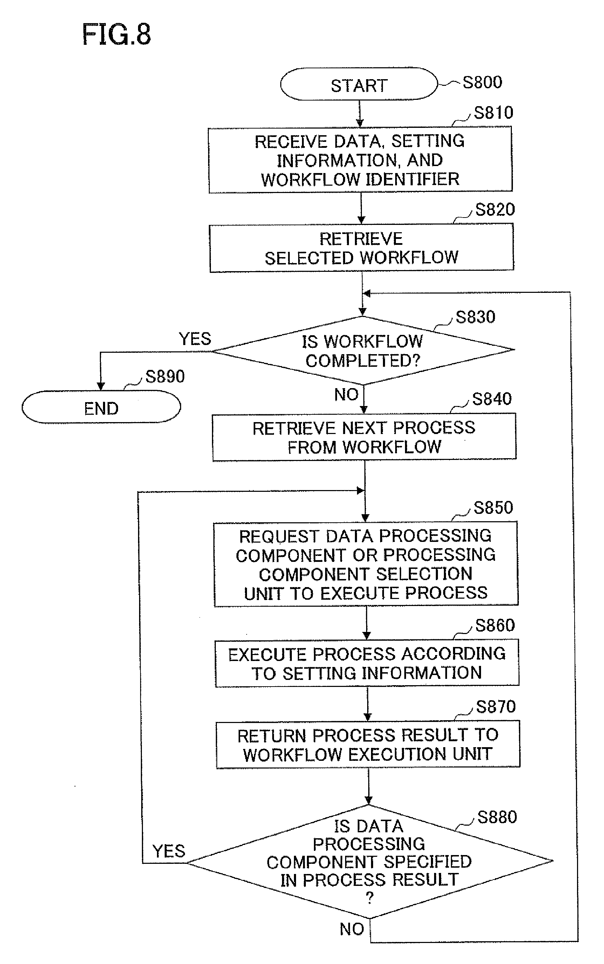

An exemplary process performed by the information processing apparatus shown in FIG. 3 is described below with reference to a flowchart shown in FIG. 8. In step 800, the user selects a workflow, specifies setting information, and inputs data by, for example, scanning a document with the scanner 24. As a result, a process according to the selected workflow is started.

In step 810, the information processing apparatus receives the data, a workflow identifier of the selected workflow, and the setting information. In step 820, the workflow execution unit 10 retrieves the selected workflow from the information storing unit 13 shown in FIG. 1 based on the workflow identifier.

In step 830, the workflow execution unit 10 determines whether the workflow is completed. In other words, the workflow execution unit 10 determines whether all processes of data processing components defined in the workflow are completed. If all the processes are completed, the flow goes to step 890 and the workflow is terminated.

If there are remaining processes, the flow goes to step 840 and the workflow execution unit 10 retrieves the next process from the workflow. In step 850, the workflow execution unit 10 requests one of the data processing components 30 through 32 or the processing component selection unit 34 to execute the next process. In step 860, the requested data processing component or the processing component selection unit 34 receives the data and a parameter in the setting information and executes the next process according to the parameter. If the parameter value is JPEG, the data are converted into a JPEG file; and if the parameter value is BMP, the data are converted into a BMP file.

In step 870, the requested data processing component or the processing component selection unit 34 returns the process result to the workflow execution unit 10. In step 880, the workflow execution unit 10 determines whether a data processing component to be executed is specified in the process result. In the above steps, if one of the data processing components 30 through 32 is requested to execute a process, the requested data processing component returns processed data as the process result to the workflow execution unit 10. On the other hand, if the processing component selection unit 34 is requested to execute a process, the processing component selection unit 34 returns information on a data processing component for processing the data as the process result to the workflow execution unit 10. Therefore, when the process result is returned from the processing component selection unit 34, the flow returns to step 850 and the workflow execution unit 10 requests the data processing component specified in the process result to process the data.

Meanwhile, when the process result (processed data) is returned from the requested data processing component, the flow returns to step 830, and the workflow execution unit 10 repeats steps 830 through 880 until the workflow is completed.

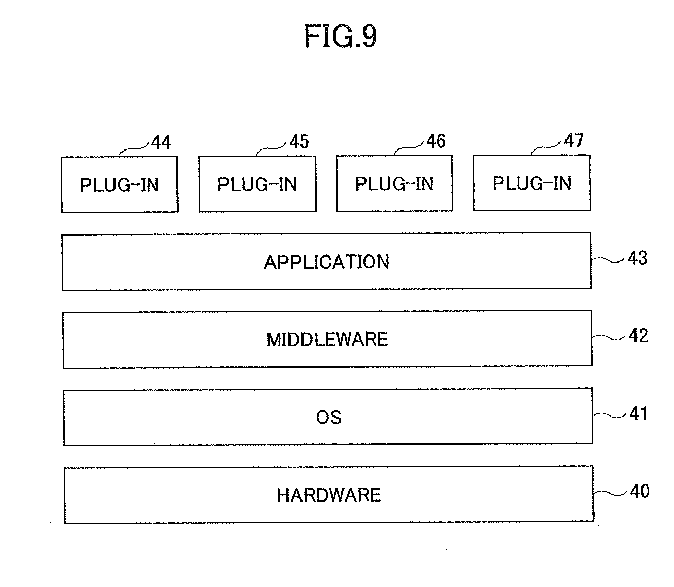

As shown in FIG. 3, the information processing apparatus includes the workflow execution unit 10, the data processing components 30 through 32, and the processing component selection unit 34. In practice, as shown in FIG. 9, the information processing apparatus may include hardware 40 and programs for causing the hardware 40 to execute various processes. The programs include an OS 41, middleware 42, an application 43, and plug-ins 44 through 47.

The hardware 40 is, for example, implemented by a computer including a CPU for executing the programs, a memory and an HDD for storing the programs, and a communication device, or by an MFD including a CPU, a memory, and a communication device.

The OS 41 is basic software that provides abstracted interfaces to the hardware 40 for the application 43 and may be implemented by a known operating system such as Windows (registered trademark), FreeBSD, or Linux. The middleware 42 runs on the OS 41 and provides the application 43 with more sophisticated and concrete functions than the OS 41. For example, the middleware 42 may be implemented by a Java(R) virtual machine.

The application 43 may be implemented by server software for providing clients with certain services and may function as the workflow execution unit 10 shown in FIG. 3.

The plug-ins 44 through 46 are small programs for providing the application 43 with additional functions such as BMP conversion, JPEG conversion, PDF conversion, and mail delivery. In other words, the plug-ins 44 through 46 may function as the data processing components 30 through 32 shown in FIG. 3. The plug-in 47 selects one of the plug-ins 44 through 46 based on a parameter and the processing component list 33 and requests the application 43 to request the selected plug-in to execute a process. Thus, the plug-in 47 may function as the processing component selection unit 34.

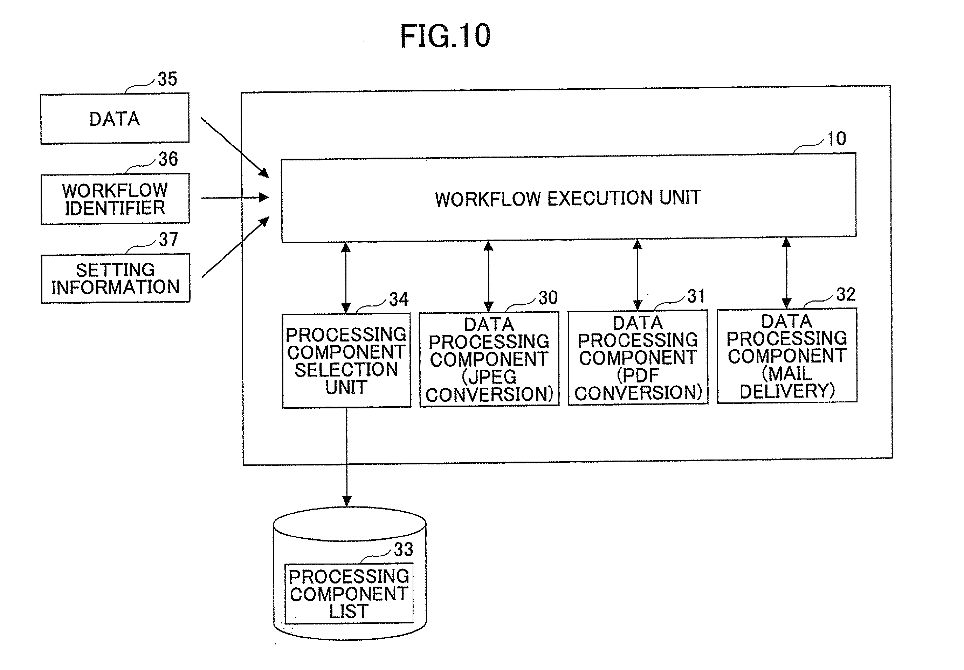

FIG. 10 is a block diagram illustrating an information processing apparatus according to a second embodiment of the present invention. In the first embodiment, as shown in FIG. 3, the processing component selection unit 34 includes the processing component list 33. In the second embodiment, the processing component list 33 is separated from the processing component selection unit 34.

In this case, the processing component list 33 may be provided as a database in the XG server 1 or the MFD 2, or may be stored in an external device connected to the information processing apparatus via a communication cable or a network. The external device may be implemented by any device such as a PC, an MFD, or a server. For example, the processing component list 33 may be stored and shared on a PC that is connected to a network and provided separately from the XG server 1 and the MFD 2 so that the processing component list 33 can be accessed by the processing component selection unit 34 via the network.

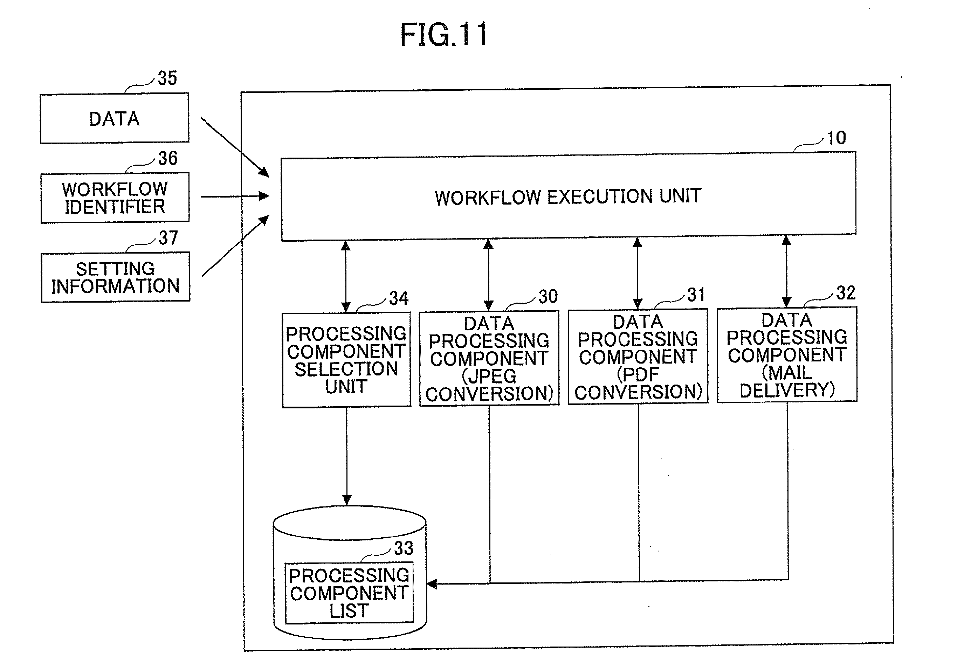

FIG. 11 is a block diagram illustrating an information processing apparatus according to a third embodiment of the present invention. In the second embodiment, it is assumed that the process component list 33 is prepared and stored by the user in advance. In the third embodiment, as shown in FIG. 11, the process component list 33 is stored in a database accessible by the data processing components 30 through 32 and information on the data processing components 30 through 32 is automatically (or dynamically) stored in the processing component list 33.

In this embodiment, each of the data processing components 30 through 32 receives a workflow selected by the user and determines whether a corresponding process is in the workflow. If the corresponding process is not in the workflow, the data processing component accesses the database and stores its information in the process component list 33. With this configuration, the processing component selection unit 34 can identify a data processing component for executing a process not defined in a workflow and request the workflow execution unit 10 to request the identified data processing component to execute the process. The information to be stored in the processing component list 33 includes a display name such as "JPEG", a parameter name such as "image format" and a parameter value such as "JPEG" used to identify a process to be executed by the data processing component, and the name of the data processing component.

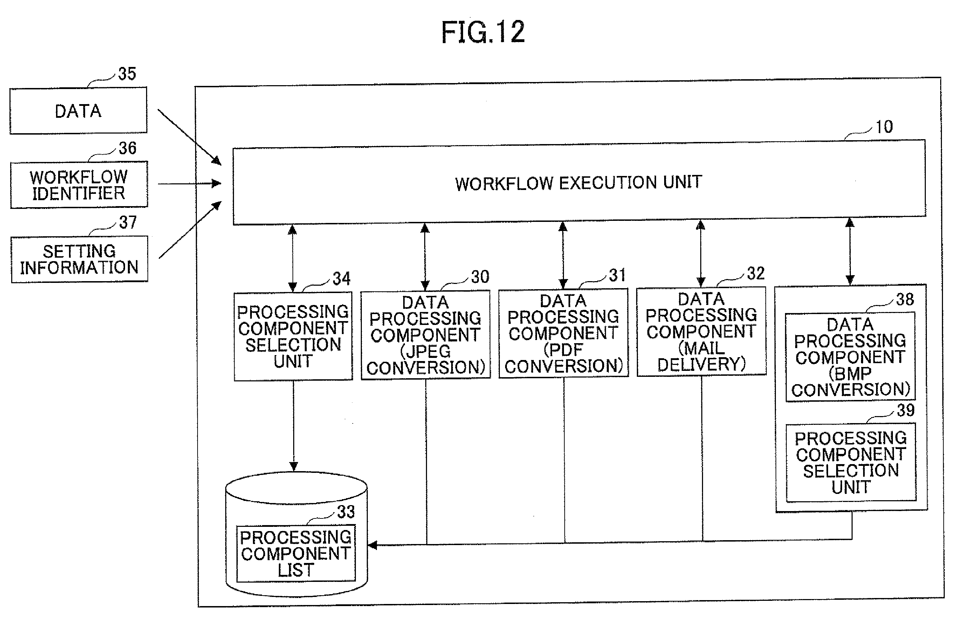

FIG. 12 is a block diagram illustrating an information processing apparatus according to a fourth embodiment of the present invention. As shown in FIG. 12, the information processing apparatus of the fourth embodiment includes a processing unit including a data processing component 38 and a processing component selection unit 39. The processing unit may include multiple data processing components. Also in this embodiment, the processing component list 33 is stored in a database accessible by the data processing components and information on the data processing components is automatically stored in the process component list 33.

The data processing component 38 converts received data into a BMP file. Similar to the processing component selection unit 34, the processing component selection unit 39 makes it possible to execute a process not defined in a workflow. In this embodiment, either the data processing component 38 or the processing component selection unit 39 is selected, for example, by the processing unit (or the workflow execution unit 10) according to selection information. The selection information is specified before a workflow is started and may be stored in the information storing unit 13.

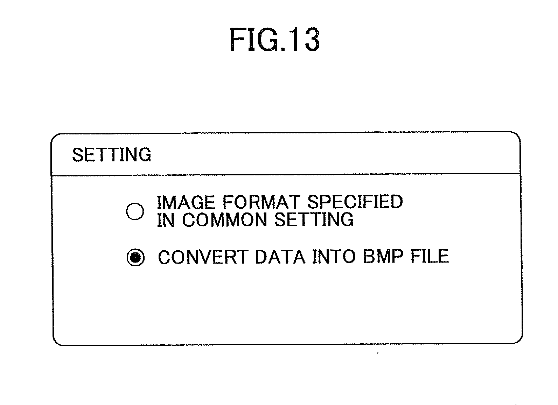

When the data processing component 38 is selected, for example, a selection screen as shown in FIG. 13 is displayed on the operations panel 24 shown in FIG. 1. On the displayed selection screen, the following two options are provided: "Image format specified in common setting" and "Convert data into BMP file". The user can select one of the options using an input device such as a mouse.

On the other hand, when the processing component selection unit 39 is selected, for example, a selection screen including the following two options is displayed: "Image format specified in common setting" and "Request processing component selection unit to execute process".

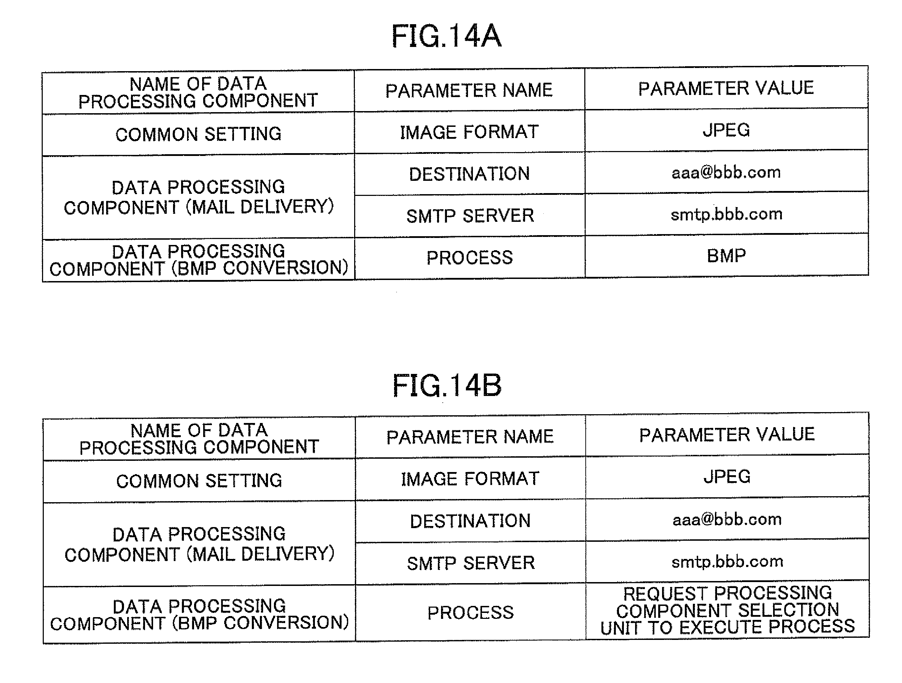

FIG. 14A is a table showing setting information to be generated when the data processing component 38 is selected; and FIG. 14B is a table showing setting information to be generated when the processing component selection unit 39 is selected. Each setting information shown in FIGs. 14A and 14B includes the name of the data processing component 38 "data processing component (BMP conversion)" and a parameter name "process". In the setting information shown in FIG. 14A, "BMP" is specified as the parameter value; and in the setting information shown in FIG. 14B, "Request processing component selection unit to execute process" is specified as the parameter value.

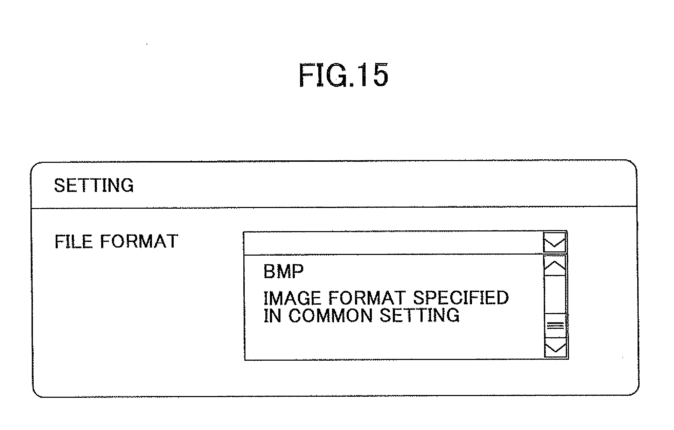

FIG. 15 shows another exemplary selection screen. On the selection screen shown in FIG. 13, options are provided by a combo box instead of radio buttons used in FIG. 13. When the data processing component 38 is selected, for example, a selection screen including options "Image format specified in common setting" and "BMP" is displayed. On the other hand, when the processing component selection unit 39 is selected, for example, a selection screen including options "Image format specified in common setting" and "Request processing component selection unit to execute process" is displayed.

With the configuration of the fourth embodiment, the workflow execution unit 10 can request either the data processing component 38 or the processing component selection unit 39, which is selected according to the selection information, to execute a process. In other words, selecting either the data processing component 38 or the processing component selection unit 39 in the processing unit in advance makes it possible to use the processing unit as if it is one of the processing components.

The present invention is not limited to the specifically disclosed embodiments, and variations and modifications may be made without departing from the scope of the present invention. More specifically, the present invention is not limited to information processing apparatuses disclosed in the above embodiments, but may also be applied to an information processing method performed by an information processing apparatus to carry out a process not defined in a workflow and to a storage medium storing program code for causing the information processing apparatus to perform the information processing method.

## Claims

1. An information processing apparatus, comprising:
a plurality of data processing components configured to process data;
a workflow execution unit configured to request the data processing components to process the data according to a workflow defining processes to be executed to process the data and an order of the processes; and
a processing component selection unit configured
to receive a request to execute an undefined process not defined in the workflow from the workflow execution unit, the request including identification information for identifying the undefined process;
to search a list for the identification information, the list associating the identification information with one of the data processing components for executing the undefined process; and
if the identification information is found in the list, to request the workflow execution unit to request the one of the data processing components associated with the identification information to process the data.

2. The information processing apparatus as claimed in claim 1, wherein the list is stored in an external device connected to the information processing apparatus.

3. The information processing apparatus as claimed in claim 1 or 2, further comprising:
a list generating unit configured to receive the workflow, to determine the undefined process not defined in the workflow, and to generate the list including the identification information identifying the undefined process.

4. The information processing apparatus as claimed in claim 1 or 2, wherein each of the data processing components is configured to receive the workflow, to determine whether a corresponding process to be executed by the each of the data processing components is defined in the workflow, and if the corresponding process is not defined in the workflow, to store identification information identifying the corresponding process in the list.

5. The information processing apparatus as claimed in any one of claims 1 to 4, further comprising:
a processing unit including a data processing component and a processing component selection unit and configured to execute a process when requested by the workflow execution unit.

6. The information processing apparatus as claimed in claim 5, wherein the processing unit is configured to receive selection information specifying either the data processing component or the processing component selection unit in the processing unit and to select either the data processing component or the processing component selection unit according to the selection information.

7. The information processing apparatus as claimed in claim 6, wherein the workflow execution unit is configured to request the selected one of the data processing component or the processing component selection unit to execute the process.

8. An information processing method performed by an information processing apparatus including data processing components for processing data, a workflow execution unit for requesting the data processing components to process the data according to a workflow defining processes to be executed to process the data and an order of the processes, and a processing component selection unit, the method comprising:
a reception step, performed by the workflow execution unit, of receiving the data, a workflow identifier indicating the workflow, and identification information for identifying an undefined process not defined in the workflow; and
a request step, performed by the processing component selection unit, the request step comprising the steps of:
receiving a request to execute the undefined process from the workflow execution unit, the request including the identification information for identifying the undefined process,
searching a list for the identification information, the list associating the identification information with one of the data processing components for executing the undefined process, and
if the identification information is found in the list, requesting the workflow execution unit to request the one of the data processing components associated with the identification information to process the data.

9. The information processing method as claimed in claim 8, wherein
the list is stored in an external device connected to the information processing apparatus; and
the request step further includes the step of communicating with the external device to access the list.

10. The information processing method as claimed in claim 8 or 9, further comprising:
a list generating step, performed by a list generating unit of the information processing apparatus, of determining the undefined process not defined in the workflow and generating the list including the identification information identifying the undefined process.

11. The information processing method as claimed in claim 8 or 9, further comprising:
a registration step, performed by each of the data processing components, of receiving the workflow, determining whether a corresponding process to be executed by the each of the data processing components is defined in the workflow, and if the corresponding process is not defined in the workflow, storing identification information identifying the corresponding process in the list.

12. The information processing method as claimed in any one of claims 8 to 11, further comprising:
a selection step performed by a processing unit of the information processing apparatus, the processing unit including a data processing component and a processing component selection unit, the selection step comprising the steps of:
receiving selection information specifying either the data processing component or the processing component selection unit in the processing unit, and
selecting either the data processing component or the processing component selection unit according to the selection information.

13. The information processing method as claimed in claim 12, further comprising:
a process request step, performed by the workflow execution unit, of requesting the selected one of the data processing component or the processing component selection unit to execute a process.

14. A storage medium readable by an information processing apparatus and having program code embodied therein for causing the information processing apparatus to perform the information processing method according to any one of claims 8 to 13.
